# EUROPÄISCHE PATENTANMELDUNG

(11) **EP 0 763 678 A2**
(43) Veröffentlichungstag der Anmeldung: **19.03.1997**
(21) Anmeldenummer: 96114354.2
(22) Anmeldetag: 07.09.1996
(51) Int. Cl.: F16H 61/00

(54) **Druckölzuführung bei einem Automatgetriebe**

(30) Priorität: 14.09.1995 DE 19533995
(71) Anmelder: ZF FRIEDRICHSHAFEN Aktiengesellschaft, 88038 Friedrichshafen (DE)
(72) Erfinder: Kauffeld, Rudolf, 88138 Sigmarszell (DE); Mozer, Herbert, 88048 Friedrichshafen (DE)

(57) **Zusammenfassung**

Bei Automatgetrieben besteht die Schwierigkeit in der Zuführung des unter hohem Druck stehenden Öls aus einem Anschlußkanal in einen Druckkanal, die sich relativ zueinander bewegen können, unter Berücksichtigung der Zielsetzung, einen hohen Wirkungsgrad und damit geringe Druckverluste bei langer Lebensdauer zu erreichen.
Der Erfindung liegt daher die Aufgabe zugrunde, die Zuführung des Öls zwischen Anschluß- und Druckkanal in der Art zu gestalten, daß hohe Drücke bewältigt werden können und zudem ein hoher Wirkungsgrad der Druckzuführung und eine lange Lebensdauer sicher gestellt ist.
Die Aufgabenstellung wurde zum einen mit einem Rohr (230, 168), das an einer Seite fest eingespannt (170) und an der anderen Seite durch ein Lager mit Dichtfunktion (171) geführt ist, gelöst. Zum anderen wurde der Übergang zwischen Druck- und Anschlußkanal mit einem rohrförmigen Vorsprung (16) an einem Bauteil, der in das andere hineinragt, gebildet.
Das Rohr (230, 168) wird zwischen der festen Einspannung (170) und der Lagerung mit Dichtfunktion (171) nicht mehr abgestützt, wodurch die erforderliche Flexibilität des Rohrs (230, 168) erreicht wird. Die Flexibilität des Rohrs bildet die Voraussetzung für eine lange Lebensdauer, eine anhaltend hohe Dichtheit nach innen und nach außen und einen daraus resultierend hohen Wirkungsgrad der Druckzuführung.
Die Gestaltung mit dem rohrförmigen Vorsprung (16) bildet eine weitere Möglichkeit den Übergang zwischen Druckkanal und Anschlußkanal zu gestalten und stellt eine technisch einfache und damit kostengünstige Lösung dar.

## Beschreibung

Die Erfindung betrifft ein Automatgetriebe mit den Merkmalen nach dem Oberbegriff von Anspruch 1.

Automatgetriebe im weiteren Sinne sind Kennungswandler, deren momentane Übersetzung sich selbsttätig in Abhängigkeit von momentanen oder zu erwartenden Betriebszuständen, wie zum Beispiel Teillast, Schub, und Umgebungsparametern, wie zum Beispiel Temperatur, Luftdruck, Luftfeuchtigkeit, stufenweise oder stufenlos verändert. Zu ihnen gehören solche Kennungswandler, die auf einem elektrischen, pneumatischen, hydrodynamischen, hydrostatischen Prinzip oder auf einem aus diesen Prinzipien gemischten Prinzip beruhen.

Die Automatisierung bezieht sich auf die verschiedensten Funktionen, wie zum Beispiel das Anfahren, die Übersetzungsauswahl, die Art der Übersetzungsveränderung bei verschiedenen Betriebssituationen, wobei unter Art der Übersetzungsveränderung zum Beispiel das Schalten von einzelnen Stufen nacheinander, das Überspringen von Schaltstufen und die Geschwindigkeit der Verstellung verstanden werden kann.

Der Wunsch nach Komfort, Sicherheit und vertretbarem Bauaufwand bestimmt der Automatisierungsgrad, d. h. wieviel Funktionen selbsttätig ablaufen.

In der Regel kann der Fahrer manuell in den automatischen Ablauf eingreifen oder ihn für einzelne Funktionen begrenzen.

Automatgetriebe im engeren Sinne, wie sie heute vor allem im Fahrzeugbau verwendet werden, haben in der Regel folgenden Aufbau:

Auf der Antriebsseite des Getriebes befindet sich eine Anfahreinheit in Form einer regelbaren Kupplung, zum Beispiel einer nassen oder trockenen Reibungskupplung, einer hydrodynamischen Kupplung oder einem hydrodynamischen Wandler.

Zu einem hydrodynamischen Wandler wird häufig eine Überbrükkungskupplung parallel zum Pumpen- und Turbinenteil geschaltet, welche durch direkte Kraftübertragung den Wirkungsgrad steigert und durch definierten Schlupf bei kritischen Drehzahlen die Schwingung dämpft.

Die Anfahreinheit treibt ein mechanisches, stufenloses oder gestuftes Wechselgetriebe an, das eine Vorwärts-/Rückwärtsfahreinheit, eine Haupt-, Bereichs-, Splitgruppe und/oder einen Variator enthalten kann. Zahnradgetriebegruppen werden, je nach Anforderungen an Laufruhe, Platzverhältnisse und Übertragungsmöglichkeiten, in Vorgelege- oder Planetenbauweise mit Gerad- oder Schrägverzahnung ausgelegt.

Das Ausgangselement des mechanischen Getriebes, eine Welle oder ein Zahnrad, treibt direkt oder indirekt über Zwischenwellen bzw. eine Zwischenstufe mit einer konstanten Übersetzung auf ein Differentialgetriebe, das als separates Getriebe gestaltet sein kann oder ein integrierter Bestandteil des Automatgetriebes ist. Grundsätzlich eignet sich das Getriebe für Längs- und Quereinbau im Fahrzeug.

Das Getriebegehäuse ist quer zu den Antriebswellen geteilt, wodurch formstabile, leicht zu bearbeitende Gehäuseteile entstehen, in denen Lagerungen einer Primärwelle, Lagerungen einer Sekundärwelle, Lagerungen einer Seitenwelle und Lagerungen von Wellen des Differentials aufgenommen sind. Primärwelle, Sekundärwelle, Seitenwelle und Differentialwellen können in den Außenwandungen des Getriebes sicher gelagert werden, indem die auftretenden Kräfte gut aufgenommen werden. Die Einbauöffnungen der Wellen sind in der Regel mit Deckeln nach außen verschlossen.

Stufenlose Automatgetriebe erfordern ein besonders hohes Druckniveau, um die Kegelscheiben des Variators in allen Betriebspunkten mit der gewünschten Geschwindigkeit verstellen zu können und außerdem mit einem genügenden Basisanpreßdruck weitgehend verschleißfrei das Drehmoment zu übertragen. Für diesen Anwendungsfall fällt die grundsätzliche Zielsetzung, ein Getriebegehäuse mit möglichst wenigen Öffnungen nach außen zu konstruieren, besonders ins Gewicht.

Zur Aufgabe, der optimalen Gehäusegestaltung unter den beschriebenen Bedingungen, wird in der Anmeldung "Gehäusegestaltung eines Automatgetriebes" eine Lösung näher beschrieben.

Aus der Automobiltechnischen Zeitschrift 96 (1994) 6, Seite 380, Bild 3, ist ein stufenloses Automatgetriebe bekannt, bestehend aus einem hydrodynamischen Wandler als Anfahreinheit, einem Planetenwendegetriebe als Vorwärts-/Rückwärtsfahreinheit, einer Radialkolbenpumpe, einem Variator, einer Zwischenwelle und einem Differential. Der Variator wiederum besteht aus zwei Kegelscheibenpaaren und einem Umschlingungsorgan. Jedes Kegelscheibenpaar besteht aus einer in axialer Richtung feststehenden ersten Kegelscheibe und einer in axialer Richtung verschiebbaren zweiten Kegelscheibe. Zwischen diesen Kegelscheibenpaaren läuft das Umschlingungsorgan, zum Beispiel ein Schubgliederband, eine Zugkette oder ein Riemen. Über die Verstellung der zweiten Kegelscheibe ändert sich der Laufradius des Umschlingungsorgans und somit die Übersetzung des stufenlosen Automatgetriebes.

Zur Verstellung der Übersetzung im mechanischen Getriebe sind hydrostatische, pneumatische und/oder elektrische Stellglieder vorgesehen. Eine Hydraulikpumpe, die nach dem Verdrängerprinzip arbeitet, liefert Drucköl für die Anfahreinheit, insbesondere die hydrodynamische Einheit, für die hydrostatischen Stellelemente des mechanischen Getriebes und für die Schmierung und Kühlung des Systems. Je nach erforderlichem Druck und Fördervolumen kommen Zahnradpumpen, Schraubenpumpen, Flügelzellenpumpen und Kolbenpumpen, letztere meistens in radialer Bauart, in Frage. In der Praxis haben sich Zahnradpumpen und Radialkolbenpumpen für diesen Zweck durchgesetzt, wobei die Zahnradpumpe wegen ihres geringen Bauaufwandes und die Radialkolbenpumpe wegen des höheren Druckniveaus und der besseren Regelbarkeit Vorteile bietet.

Die Hydraulikpumpe kann an einer beliebigen Stelle des Getriebes an einer ständig von der Antriebseinheit angetriebenen Haupt- oder Nebenwelle angeordnet sein. Um das Drucköl über kurze Leitungen bzw. Kanäle den Verbrauchern zuzuführen, wird die Pumpe in der Regel an einer zentralen Stelle, nämlich zwischen der Anfahreinheit und dem Wechselgetriebe, vorgesehen. Geeignet hierfür ist eine Lagerwand zwischen der Anfahreinheit und dem Wechselgetriebe, in deren Bereich das Getriebegehäuse quer zur Antriebswelle häufig geteilt ist.

Die Lagerwand kann zwischen dem Gehäuseteil des Wechselgetriebes und einer Kupplungs- oder Wandlerglocke, die die Anfahreinheit umschließt und mit der das Getriebe an eine Antriebseinheit angeflanscht wird, als separates Bauteil befestigt oder ein integrierter Bestandteil der Wandlerglocke sein, die dann den stirnseitigen Abschluß des Wechselgetriebes bildet.

Zur Aufnahme einer innenachsigen Zahnradpumpe oder Radialkolbenpumpe besitzt die Lagerwand eine zylindrische Aufnahmebohrung, in die der Pumpenkörper und die übrigen Pumpenelemente eingesetzt werden. Aufbau und Funktion der Radialkolbenpumpe sind in der Patentanmeldung "Automatgetriebe mit Hydraulikpumpe (195 26 268.9) näher ausgeführt.

Das Drucköl gelangt von der Hydraulikpumpe über Leitungen im oder am Gehäuse zu einem hydraulischen Steuergerät. Das hydraulische Steuergerät enthält Steuerventile in der Regel in Form von Magnetventilen. Diese werden von dem elektronischen Steuergerät in üblicher Weise durch Pulsweitenmodulation gesteuert bzw. geregelt und sorgen für den erforderlichen Druck und Volumenstrom für die hydraulischen Verbraucher und Stellglieder. Zu diesen führen ebenfalls Leitungen im und am Gehäuse sowie Bohrungen in den rotierenden Wellen des Getriebes.

Die Ausgestaltung der Leitungen im und am Gehäuse, zur Versorgung der hydraulischen Verbraucher, sind in der Patentanmeldung "Gehäusegestaltung eines Automatgetriebes".

Grundsätzlich besteht die Zielsetzung darin, daß die Leitungen einen geringen Strömungswiderstand, keine bzw. möglichst wenig Leckage und geringe Elastizitäten aufweisen.

Die Schwierigkeit besteht besonders darin, das Öl aus ruhenden Kanälen im Getriebegehäuse, in die sich drehende Wellen überzuleiten.

Dabei soll das Ziel erreicht werden, den Wirkungsgrad durch geringere Druckverluste zu verbessern und die Lebensdauer zu verlängern.

Der Erfindung liegt daher die Aufgabe zugrunde, die Zuführung des Öls zu den rotierenden Druckräumen der Kegelscheiben unter Berücksichtigung der oben beschriebenen Zielsetzung zu gestalten.

Sie wird gemäß der Erfindung durch die Merkmale des Anspruches 1 gelöst.

Durch ein Rohr, das an einem Ende fest eingespannt und am anderen Ende durch ein Lager mit Dichtfunktion gelagert ist, kann eine interne Leitungsführung ermöglicht werden.

Das Rohr wird zwischen der festen Einspannung und dem Lager mit Dichtfunktion nicht weiter abgestützt.

Durch die interne Leitungsführung können Stellen, die nach innen und nach außen abgedichtet werden müßten, vermieden, Leckagestellen reduziert und damit ein besserer Wirkungsgrad erreicht werden.

Das Abdichten des Rohrs, mittels eines Lagers mit Dichtfunktion, bewirkt insbesondere, daß das Druckniveau vor und nach dem Übergang konstant gehalten und damit eine Steigerung des Wirkungsgrades erreicht wird.

Zum weiteren kann durch das Rohr eine technisch einfache, platzsparende Ausgestaltung des Übergangs zwischen sich relativ zueinander bewegenden Druck- und Anschlußkanälen erreicht werden, wodurch Zeit, Material und damit Geld bei der Montage gespart wird.

Von großer Bedeutung ist, daß das Rohr eine gewisse Flexibilität aufweist, damit für die Führung des Rohrs, auf der Seite des Gehäuseteils, eine hohe Lebensdauer sicher gestellt werden kann. Ist eine entsprechende Flexibilität nicht vorhanden und das Rohr kann sich dadurch nicht selbst in der Führung zentrieren, so arbeitet die feste Einspannung des Rohr in der Welle gegen die Führung des Rohrs am Gehäuse und es führt damit zu Verschleiß, dadurch bedingte Undichtheit, Druckverlust und möglicherweise zum Ausfall der Führung.

Die Flexibilität des Rohrs kann prinzipiell durch zwei Variablen beeinflußt werden. Zum einen durch den spezifischen Materialwert des Rohrs und zum anderen durch die Abmessungen des Rohrs. Bei der zweiten Variablen kann beispielsweise die Flexibilität durch Längen- und Durchmesseränderungen beeinflußt werden. Wichtig erscheint jedoch bei sämtlichen Kombinationen der zwei beschriebenen Variablen, daß das Rohr nur an einer Stelle, und zwar an der am weitest von der Lagerung mit Dichtfunktion entfernten Stelle eingespannt ist und über die restliche Länge bis zur Führung am Gehäuse nicht mehr abgestützt wird. Dies hat zur Folge, daß ausgehend von festen Variablen, die größtmögliche Flexibilität, aufgrund der Ausnutzung der größtmöglichen Länge des Rohrs, erzielt und damit die Lebensdauer der Führung des Rohrs gesteigert wird.

Die feste Verbindung des Rohrs innerhalb der Welle kann grundsätzlich durch Formschluß, beispielsweise Verstiftung, durch Reibschluß, beispielsweise Preßpassung, und durch eine Kombination von beidem, beispielsweise durch das Verschrauben des Rohrs und der Welle ineinander, erreicht werden.

Die Lagerung mit Dichtfunktion kann beispielsweise durch ein Gleitlager, ein Dichtes Wälzlager (z. B. Wälzlager mit schleifender Dichtungen, wie z. B. Gleitringdichtung, Radialdichtringe, Filzdichtringe, Deckscheiben und Dichtscheiben oder Wälzlager mit berührungslosen Dichtungen) oder durch einen metallischen Dichtring mit rechteckigem Querschnitt gebildet werden.

Wird die Lagerung mit Dichtfunktion durch einen derartigen Dichtring gebildet, so muß eine Buchse, beispielsweise aus Stahl, die dann den Dichtring trägt, verwendet werden. Hierzu wird nachfolgend, bei der Gestaltung des Übergangs mit einem rohrförmigen Vorsprung, noch näher eingegangen, was analog für dies Ausgestaltung gilt.

Der Übergang zwischen Druckkanal und Anschlußkanal kann sich zwischen beliebigen Bauteilen, wie beispielsweise zwischen zwei Wellen, einer Welle und einer Achse, einem Gehäuseteil und einer Welle oder Achse, zwei Achsen oder zwischen zwei Gehäuseteilen usw., befinden.

Die Wellen, in denen sich der Übergang befindet, können beispielsweise als Primär-, Sekundär-, Zwischen-, Differentialwelle usw. dienen.

Durch die Gestaltung des Übergangs zwischen Druck- und Anschlußkanal mit einem Rohr, bildet sich ein Ringspalt zwischen Rohr und dem umgebenden Bauteil, beispielsweise Gehäuseteil.

Hierdurch besteht die Möglichkeit, den Ringspalt für eine zweite Druckölzuführung zu nutzen.

Durch die zweite Ölzuführung kann beispielsweise ein zweiter Verbraucher mit Drucköl versorgt oder der Differenzdruck zwischen zwei Räumen, beispielsweise vor und hinter einem Kolben, konstant gehalten werden. Der Vorteil den Differenzdruck mit einer derartigen Ausgestaltung konstant zu halten, besteht darin, daß der Wirkungsgrad gegenüber herkömmlichen Lösungen gesteigert werden kann.

Eine herkömmliche Lösung besteht beispielsweise darin, daß, durch eine Drosselstelle im Kolben des Zylinders, der Ausgleichsdruck erzeugt und damit der Differenzdruck konstant gehalten wird. Dies führt unweigerlich zu Verlust an der Drosselstelle.

Der Übergang kann zudem dadurch erreicht werden, indem ein Bauteil mit einem rohrförmigen Vorsprung in den Druckkanal bzw. Anschlußkanal ragt und der rohrförmige Vorsprung eine radiale, berührungslose oder schleifende Dichtung bildet oder aufweist.

Durch den rohrförmigen Vorsprung kann ebenfalls der Übergang zwischen zwei Bauteilen, die sich relativ zueinander bewegen, ohne großen technischen Aufwand und damit kostengünstig erreicht werden.

Das Bauteil mit dem Rohrförmigen Vorsprung kann beispielsweise eine Welle, eine Achse, ein Gehäuseteil usw. darstellen. Es sind also sämtliche Kombinationen zwischen den Bauteilen möglich, indem jeweils ein Bauteil den rohrförmigen Vorsprung enthält und damit in das andere Bauteil eingreift.

Zwischen dem rohrförmigen Vorsprung und dem Bauteil, in das der Vorsprung eingreift, muß sich eine schleifende, z. B. ein metallischer Dichtring, Gleitringdichtung, Radialdichtringe usw., oder eine berührungslose Dichtung, z. B. Spaltdichtung mit Fettrillen, Labyrinthdichtungen usw., befinden. Diese kann durch ein weiteres Bauteil oder durch den rohrförmigen Vorsprung ganz oder teilweise gebildet werden.

Der Grund für die Dichtung zwischen den Bauteilen besteht darin, daß der Druck und Volumenstrom vor und nach dem Übergang konstant gehalten und damit ein hoher Wirkungsgrad erreicht werden kann.

Wird die Dichtung durch einen metallischen Dichtring mit rechteckigem Querschnitt gebildet, der sich relativ zu beiden Bauteilen bewegen kann, so müssen die Bauteile aus den gleichen oder aus kombinierbaren Materialien bestehen. Ist dies nicht der Fall, so muß in einem Bauteil eine Buchse, die aus dem selben Material wie das andere Bauteil oder aus kombinierbarem Material ist, angebracht werden. Der metallische Dichtring wird dann zwischen der Buchse und dem anderen Bauteil geführt. Da sich der metallische Dichtring damit zwischen zwei gleichen oder kombinierbaren Materialien bewegt, kann eine höhere Lebensdauer erreicht werden.

Eine einfache und damit kostengünstige Lösung wird erreicht, indem die Buchse in den rohrförmigen Vorsprung, z. B. durch einkleben, einpressen, einschweißen usw. eingesetzt wird. Der metallische Dichtring mit rechteckigem Querschnitt wird an einer Seite der Buchse getragen, die aus dem rohrförmigen Vorsprung herausragt und mit ihrem Umfang das andere Bauteil berührt oder einen schmalen Ringspalt bildet.

In der Beschreibung und in den Ansprüchen sind zahlreiche Merkmale im Zusammenhang dargestellt und beschrieben. Der Fachmann wird die Merkmale zweckmäßigerweise auch einzeln betrachten und zu sinnvollen Kombinationen zusammenfassen.

In der Zeichnung ist ein Ausführungsbeispiel der Erfindung dargestellt.
Es zeigen:
- Fig. 1: ein Systemschaubild über den Aufbau eines stufenlosen Automatgetriebes;

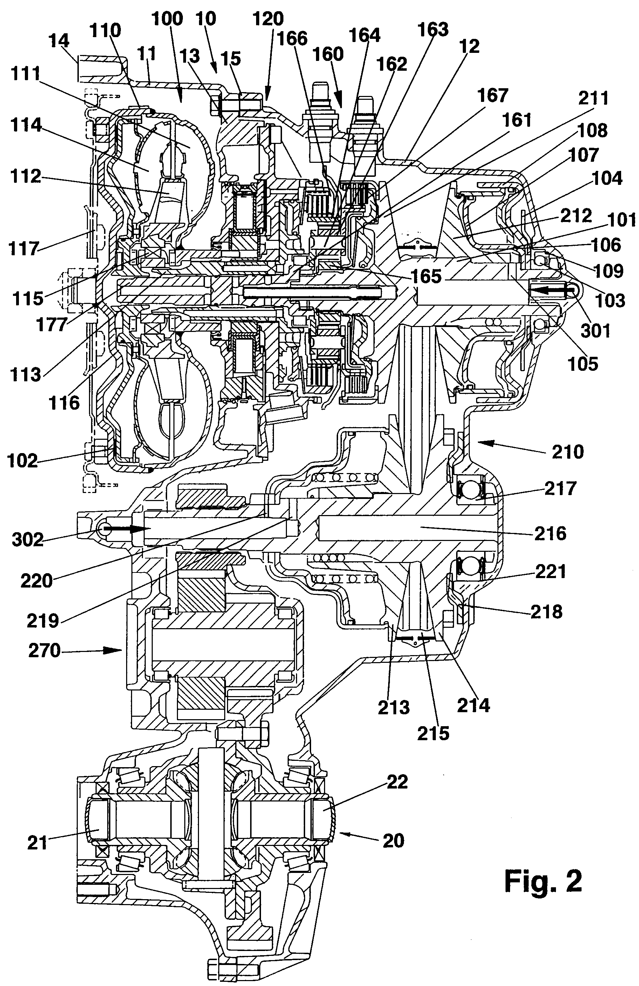

- Fig. 2: einen ersten Querschnitt durch ein stufenloses Automatgetriebe;

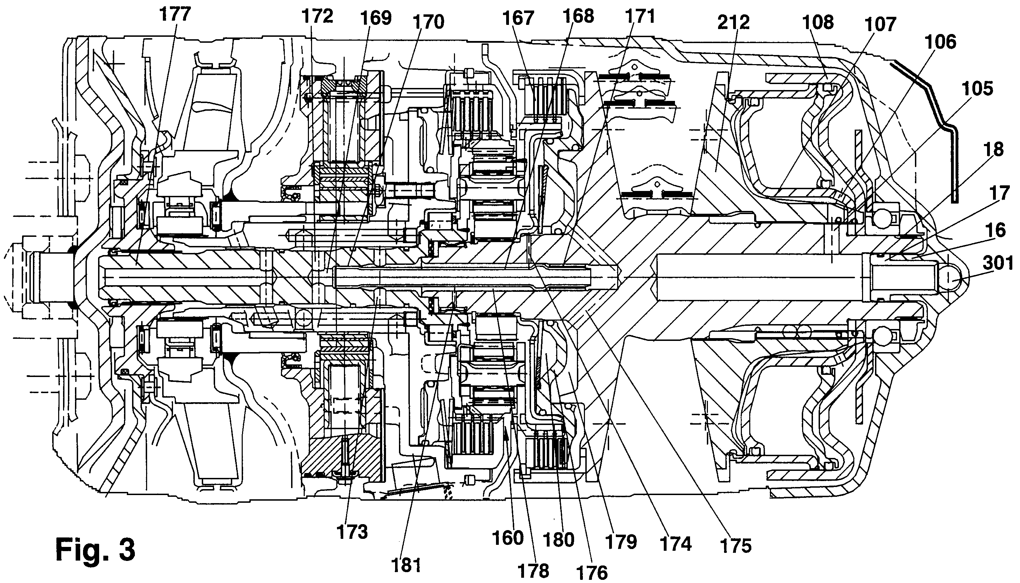

- Fig. 3: vergrößerten Ausschnitt aus dem Bereich der Primärwelle und

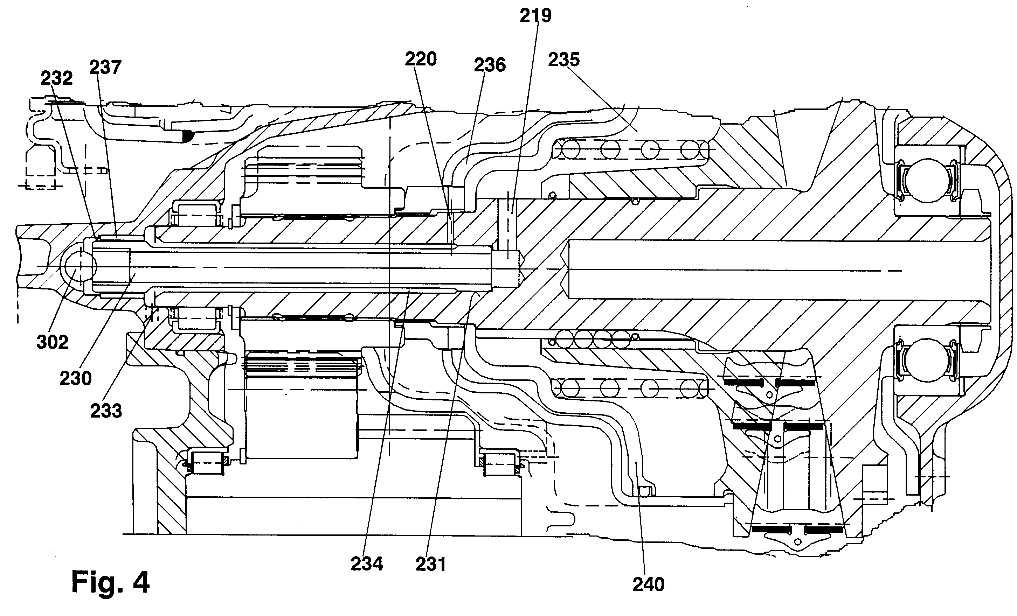

- Fig. 4: vergrößerten Ausschnitt aus dem Bereich der Sekundärwelle.

### Fig. 1:

In einem Gehäuse 10 des Automatgetriebes sind eine Anfahreinheit 100, eine Radialkolbenpumpe 120, eine Vorwärts-/Rückwärtsfahreinheit 160, ein Variator 210, eine konstante Zwischenübersetzung 270, ein Differential 20 und ein hydraulisches Steuergerät untergebracht. Das hydraulische Steuergerät 3 arbeitet mit einem elektronischen Steuergerät 4 zusammen. Das Automatgetriebe ist für einen Einbau quer zur Fahrtrichtung eines Fahrzeuges vorgesehen.

### Fig. 2:

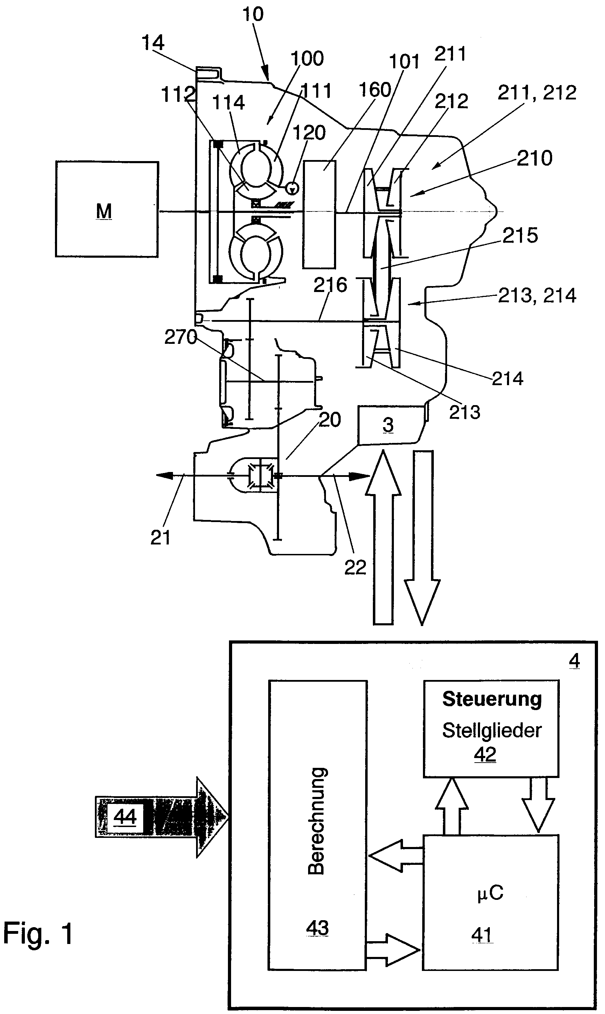

Das Gehäuse 10 ist quer zu den Drehachsen geteilt. Mit einem Anschlußflansch 14 kann der antriebsseitige Teil des Gehäuses 10 an den symbolisch dargestellten Antriebsmotor M (Fig. 1) angeflanscht werden. Der Anschlußflansch 14 gehört zu einem als Wandlerglocke 11 bezeichneten Gehäuseteil, das die Anfahreinheit einschließt und zu einer Trennfuge 15 des Gehäuseteils 12 eine motorseitige Lagerwand 13 bildet.

In den Stirnwänden der beiden Gehäuseteile 11, 12 sind Primär- 101, Sekundär- 216, Seitenwelle 270 und Wellen des Differentials 20 gelagert. Das dem Wandler abgewandte Gehäuseteil 12 umschließt in ungeteilter Form und ohne Öffnungen nach außen die Primär- 101 und die Sekundärwelle 216 und in ungeteilter Form mit Öffnungen nach außen das Differential 20. Die Lager 103, 217 der Primär- 101 und der Sekundärwelle 216 werden durch Haltebleche 104, 218, die von innen mit dem Gehäuseteil 12 in Sacklöchern verschraubt sind, fixiert.

Als Anfahreinheit 100 dient eine hydrodynamische Einheit in Form eines Wandlers 110 mit einem Pumpenrad 111, das über ein Wandlergehäuse 116 und eine Membran 117 vom Antriebsmotor angetrieben wird. Die Membran 117 gleicht einen kleinen Achs- und/oder Winkelversatz zwischen dem Antriebsmotor und dem Automatgetriebe aus.

Der Wandler hat ferner ein Leitrad 112, das sich über einen Freilauf 115 und eine Leitradwelle am Gehäuseteil 12 abstützt. Das Pumpenrad 111 und das Leitrad 112 arbeiten mit einem Turbinenrad 114 in einem hydrodynamischen Kreislauf zusammen. Das Turbinenrad 114 treibt über eine Primärwelle 101 die Vorwärts-/Rückwärtsfahreinheit 160 an. Um den Wirkungsgrad des Wandlers 110 zu verbessern und Schwingungen im Antriebsstrang zu reduzieren, ist zwischen dem Pumpenrad 111 bzw. dem damit verbundenen Wandlergehäuse und dem Turbinenrad 114 eine Überbrückungskupplung 102 vorgesehen, die im Bedarfsfall schlupfgesteuert wird.

### Fig. 3:

Ein Ölkanal 301, der vollständig innerhalb des Gehäuses 12 liegt, führt Drucköl, zur Verstellung der Kegelscheibe 212, in die Primärwelle 101. Der Übergang zwischen Gehäuse und Welle wird durch einen rohrförmigen Vorsprung 16 des Gehäuseteil 12 gebildet. In dem rohrförmigen Vorsprung 16 ist eine Buchse 17 eingesetzt, die einen metallischen Dichtring 18 mit rechteckigem Querschnitt trägt. Durch eine Durchlaßöffnung 105 in der Welle und einer zweiten Durchlaßöffnung 106 in einem Kolben 107 des Tandemzylinder 108 wird das Öl in die entsprechenden Druckräume gebracht und führt damit zur gewünschten Stellung der dem Gehäuseteil 12 zugewandten Kegelscheibe 212.

Das Drucköl, zur Verstellung des Kupplungskolbens 176, wird über die erste Durchlaßöffnung 172 in den Ölsammelraum 169 geführt. Von dort aus, wird das Öl über ein Rohr 168 zu einer vierten Durchlaßöffnung 175 geleitet, welche in einem Raum 1 des Kupplungskolbens 176 endet. Das Rohr 168 verbindet Eingangswelle 177 und Primärwelle 101 und besitzt in der Eingangswelle 177 eine feste Einspannung 170 und in der Primärwelle 101 ein Gleitlager 171. Zwischen den beiden Punkten 170, 171 weist das Rohr 168 keine weitere Abstützung auf.

Eine zweite Ölzuführung findet über eine zweite Durchlaßöffnung 173 statt. Das Öl wird über einen Ringspalt 178 und eine dritten Durchlaßöffnung 173 einem zweiten Raum 180 des Kupplungskolbens 176, zur Erzeugung eines Differenzdruckes, und durch eine fünfte Durchlaßöffnung 181 der Vorwärts-/Rückwärtsfahreinheit 160 zugeführt.

### Fig. 4:

Die Ölzuführung 302 für die Sekundärwelle 216 findet in der Längsachse des Getriebes statt und endet in der dem Wandler zugewandten Stirnseite der Sekundärwelle 216. Das Drucköl wird durch ein, in die Sekundärwelle 216 eingesetztes, Rohr 230 dem innenliegenden Druckraum 235 des Kolbens 240, über die Durchlaßöffnung 220 in der Sekundärwelle 216, zugeführt. Das Rohr 230 ist an der innenliegenden Seite 231 in der Sekundärwelle 216 fest eingespannt und an der außenliegenden Seite 232 durch ein Gleitlager 237 geführt und nach außen abgedichtet. Zwischen der festen Einspannung an der innenliegenden Seite 231 und dem Gleitlager 237 an der außenliegenden Seite 232 befindet sich keine Abstützung des Rohrs 230.

Eine zweite Zuführung von Drucköl findet über die Zuleitung 233, über den sich zwischen Sekundärwelle 216 und Rohr 230 bildenden Ringspalt 234 und über die Durchlaßöffnung 220, in den außenliegenden Druckraum 236 des Kolbens 240, zum Erzeugen eines konstanten Differenzdruckes zwischen den Druckräumen 235 und 236, statt.

### Fig. 2:

Die Vorwärts-/Rückwärtsfahreinheit 160 ist ein Planetensatz mit einem Planetenträger 161, der von der Primärwelle 101 angetrieben wird. In ihm sind auf Planetenbolzen 162 Planetenräder 163 gelagert, die einerseits mit einem Hohlrad 164 und andererseits mit einem Sonnenrad 165 kämmen. Während das Hohlrad 164 über eine Bremse 166 am Gehäuseteil 12 abgestützt werden kann und somit einen Rückwärtsgang bildet, wird zum Vorwärtsfahren der Planetensteg über eine Kupplung 167 mit dem ersten Kegelscheibenpaar 211, 212 des Variators 210 gekuppelt.

Der Variator 210 ist ein Umschlingungsgetriebe mit einem ersten Kegelscheibenpaar 211, 212 und einem zweiten Kegelscheibenpaar 213, 214, die über ein Umschlingungsorgan, wie zum Beispiel Schubgliederband 215, zusammenwirken.

Jedes Kegelscheibenpaar besteht aus einer in axialer Richtung feststehenden Kegelscheibe 211, 214 und einer in axialer Richtung verschiebbaren Kegelscheibe 212, 213. Die Übersetzung des Getriebes wird verändert, indem die Position der verschiebbaren zweiten Kegelscheibe geändert wird. Dadurch ändert sich der Laufradius des Umschlingungsorgans 215 und somit die Übersetzung. Der Variator 210 ist mit einer Sekundärwelle 216 verbunden. Eine Seitenwelle 270 ist mit der Sekundärwelle 216 über ein Zahnradpaar verbunden. Die Seitenwelle 270 dient der Drehrichtungsumkehr und einer Drehzahlanpassung. Die Seitenwelle 270 ist über ein Zahnradpaar mit dem Differential 20 verbunden. Ausgangsgröße des Differentials 20 sind die beiden Achshalbwellen 21 und 22, die auf die Antriebsräder des Fahrzeugs führen.

### Fig. 1:

Das elektronische Steuergerät 4 steuert über nicht dargestellte elektromagnetische Stellglieder das CVT. Vom elektronischen Steuergerät 4 sind als Funktionsblöcke dargestellt der Micro-Controller 41, ein Funktionsblock Berechnung 43 und ein Funktionsblock Steuerung Stellglieder 42. Am elektronischen Steuergerät 4 sind Eingangsgrößen 44 angeschlossen. Eingangsgrößen 44 sind zum Beispiel das Signal einer Drosselklappe, das Signal der Drehzahl der Antriebseinheit, das Signal der Fahrzeuggeschwindigkeit und die Drehzahlsignale der Kegelscheibenpaare. Der Micro-Controller 41 berechnet mittels des Funktionsblocks 43 aus den Eingangsgrößen 44 die Funktionsparameter für das CVT. Diese werden mittels des Funktionsblocks Steuerung Stellglieder 42 und über die nicht dargestellten elektromagnetischen Stellglieder, welche sich im hydraulischen Steuergerät 3 des CVT befinden, eingestellt. Funktionsparameter des CVT sind zum Beispiel die Übersetzung und der Anpreßdruck der Kegelscheiben zum Schubgliederband 215.

### Bezugszeichen

- 1er: Nummernkreis (1/10 - 19/100 - 199):

### Gehäuse

- 10: gesamtes Gehäuse
- 11: antriebsseitiger Teil des Gehäuses (Wandlergloke)
- 12: Gehäuseteil auf der Seite des Variators
- 13: Lagerwand
- 14: Anschlußflansch
- 15: Trennfuge
- 16: rohrförmiger Vorsprung
- 17: Buchse
- 18: metallischer Dichtring mit rechteckigem Querschnitt

### Anfahreinheit

- 100: Anfahreinheit gesamt
- 110: nähere Bezeichnung (hydrodynamischer Wandler)
- 111: Pumpenrad
- 112: Leitrad
- 113: Leitradwelle
- 114: Turbinenrad
- 115: Freilauf
- 116: Wandlergehäuse
- 117: Membran
- 101: Primärwelle
- 102: Überbrückungskupplung
- 103: Lager Primärwelle (auf der dem Wandler abgewandten Seite)
- 104: Halteblech der Primärlagerung (auf der dem Wandler abgewandten Seite)
- 105: Durchlaßöffnung in der Primärwelle
- 106: Durchlaßöffnung im 1 Kolben des Tandemzylinders
- 107: Kolben des Tandemzylinder
- 108: Tandemzylinder
- 109: Lagersitz der Primärwelle (auf der dem Wandler abgewandten Seite)

### Hydraulikpumpe

- 120: Radialkolbenpumpe gesamt

### Vorwärts-/Rückwärtsfahreinheit

- 160: Vorwärts/Rückwärts gesamt
- 161: Planetenträger
- 162: Planetenbolzen
- 163: Planetenräder
- 164: Hohlrad
- 165: Sonnenrad
- 166: Bremse
- 167: Kupplung
- 168: Rohr
- 169: Ölsammelraum
- 170: Feste Einspannung
- 171: Gleitlager
- 172: erste Durchlaßöffnung
- 173: zweite Durchlaßöffnung
- 174: dritte Durchlaßöffnung
- 175: vierte Durchlaßöffnung
- 176: Kupplungskolben
- 177: Eingangswelle
- 178: Ringspalt
- 179: erster Raum
- 180: zweiter Raum
- 181: fünfte Durchlaßöffnung
- 2er: Nummernkreis (2/20 - 29/200 - 299):

### Differential

- 20: gesamtes Differential
- 21: Achshalbwellen
- 22: Achshalbwellen
- 2: Eingangszahnrad

### Variator

- 210: gesamter Variator
- 211, 212: erstes Kegelscheibenpaar
- 213, 214: zweites Kegelscheibenpaar
- 215: Umschlingungsorgan (Schubgliederband)
- 216: Sekundärwelle
- 217: Lager der Sekundärwelle (auf der dem Wandler abgewandten Seite)
- 218: Halteblech der Sekundärwellenlagerung (auf der dem Wandler abgewandten Seite)
- 219: erste Durchlaßöffnung in der Sekundärwelle
- 220: zweite Durchlaßöffnung in der Sekundärwelle
- 221: Lagersitz der Sekundärwelle (auf der dem Wandler abgewandten Seite)
- 230: Rohr in der Sekundärwelle
- 231: Festeinspannung in der innenliegenden Seite des Rohrs
- 232: Außenliegende Seite des Rohrs
- 233: Zuleitung der zweiten Druckölzuführung
- 234: Ringspalt zwischen Sekundärwelle und Rohr
- 235: innenliegender Druckraum des Kolbens
- 236: außenliegender Druckraum des Kolbens
- 237: Gleitlager an der außenliegenden Seite des Rohrs
- 240: Kolben

### Seitenwelle

- 270: gesamte Seitenwelle
- 3er: Nummernkreis (3/30 - 39/300 - 399):

### Hydraulisches Steuergerät

- 3: gesamtes Gerät
- 301: Ölzuführung der Primärwelle
- 302: Ölzuführung der Sekundärwelle
- 4er: Nummernkreis (4/40 - 49/400 - 499):

### Elektronisches Steuergerät

- 4: gesamtes elektronisches Steuergerät
- 41: Micro-Controller
- 42: Funktionsblock Steuerung Stellglieder
- 43: Funktionsblock Berechnung
- 44: Eingangsgrößen
- M: Antriebseinheit

## Patentansprüche

1. Stufenloses Automatgetriebe mit den Merkmalen:
- in rotierenden Wellen, sind Druckkanäle koaxial angeordnet;
- das Drucköl gelangt von benachbarten Bauteilen in diese Kanäle durch koaxial angeordnete Anschlußkanäle, die sich relativ zueinander bewegen können,
**gekennzeichnet** durch folgende Merkmale:
- ein Rohr (168, 230) verbindet den Anschlußkanal mit dem Druckkanal;
- an einem Ende ist es fest eingespannt und am anderen Ende ist es durch ein Lager (237, 171) mit Dichtfunktion gelagert;
- zwischen diesen beiden Stellen ist das Rohr (168, 230) frei tragend.

2. Automatgetriebe nach Anspruch 1, dadurch **gekennzeichnet,** daß die Länge des Rohres (168, 230) größer als der fünffache äußere Durchmesser ist.

3. Automatgetriebe nach Anspruch 1 oder 2, dadurch **gekennzeichnet,** daß zwischen dem Rohr (168, 230) und der Welle (101, 177, 216), im freitragenden Bereich, ein Ringraum (178) gebildet wird, der als weiterer Ölkanal dient.

4. Automatgetriebe nach dem Oberbegriff von Anspruch 1, dadurch **gekennzeichnet,** daß ein Bauteil mit einem rohrförmigen Vorsprung (16) in den Druckkanal bzw. Anschlußkanal ragt und der rohrförmige Vorsprung (16) eine radiale, berührungslose oder schleifende Dichtung (18) bildet oder aufweist.

5. Automatgetriebe nach Anspruch 4, dadurch **gekennzeichnet,** daß die Dichtung (18) von einem metallischen Dichtring mit rechteckigem Querschnitt gebildet wird.

6. Automatgetriebe nach Anspruch 5, dadurch **gekennzeichnet,** daß in den rohrförmigen Vorsprung (16) stirnseitig eine Buchse (17) eingesetzt ist, die die radiale Dichtung (18) trägt.
